# EUROPEAN PATENT SPECIFICATION

(11) **EP 0 857 325 B1**
(45) Date of publication and mention of the grant of the patent: **02.05.2002**
(21) Application number: 97936882.6
(22) Date of filing: 21.08.1997
(51) Int. Cl.: G05D 1/03

(54) **AN UNMANNED VEHICLE**
UNBEMANNTES FAHRZEUG
VEHICULE SANS PILOTE

(30) Priority: 29.08.1996 EP 96202396
(43) Date of publication of application: 12.08.1998
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: NL9700475
(87) International publication number: WO9809207

(56) References cited:
- EP-A- 0 578 325
- WO-A-91/09275
- DE-A- 4 339 600
- DE-A- 4 434 789
- FR-A- 2 583 871
- US-A- 4 657 087
- US-A- 5 111 401
- US-A- 5 314 037
- US-A- 5 350 033
- US-A- 5 530 330
- US-A- 5 610 815
- PATENT ABSTRACTS OF JAPAN vol. 096, no. 010, 31 October 1996 & JP 08 165681 A (NISHIMATSU CONSTR CO LTD;MICRO DYNAMICS KK), 25 June 1996,
- TOSHIHIRO TSUMURA: "AGv IN JAPAN RECENT TRENDS OF ADVANCED RESEARCH, DEVELOPEMENT, AND INDUSTRIAL APPLICATIONS" PROCEEDINGS OF THE IEEE/RSJ/GI INTERNATIONAL CONFERENCE ON INTELLIG ROBOTS AND SYSTEMS: ADVANCED ROBOTICS AND THE REAL WORLD, MUNICH, SEPT. 12 - 16, 1994, vol. 3, 12 September 1994, INSTITUTE OF ELECTRICAL AND ELECTRONICS ENGINEERS, pages 1477-1484, XP000510593

## Description

The invention relates to an unmanned agricultural vehicle, such as a tractor, provided with a transceiver installation which is arranged to cooperate with a stationary transceiver installation and/or with a satellite-navigation system, such as GPS, the vehicle being provided with a monitoring system including sensors, with the aid of which a check can be made or intervention can be resorted to if, during operation, the unmanned vehicle and/or an agricultural implement supported or towed thereby do/does not function in accordance with the requirements therefor.

Such a vehicle is known from US-A-5,610,815.

It is an object of the invention to provide an alternative agricultural vehicle.

According to the invention, this is achieved in that the monitoring system of the vehicle is provided with sensors on both sides of the vehicle close to the front and rear sides and in the centre thereof and with the aid of which the distance to the ground can be measured, in that the monitoring system is provided with a computer which, after receiving signals from the sensors, is designed to transmit via the transceiver-installation a signal to a mobile transceiver-installation of a supervisor if the measured depth deviates from a required depth. By measuring the distance of the vehicle to the ground at three points, during ploughing for example a check can be made as to whether there is obtained an even furrow having a constant depth. In order to prevent that the agricultural implement performs an incorrect operation, the monitoring system, according to an inventive feature, is provided with a computer which, after having received signals from the sensors, transmits a signal to the vehicle's control system in order to stop the vehicle. After the vehicle has stopped, according to a further inventive feature, the computer is designed to give a warning to the mobile transceiver-installation of the supervisor via the transceiver- installation in the event of an interruption occurring.

In order to avoid the need for the supervisor to remain in the vicinity of the vehicle during its operation, according to a further inventive feature, the mobile transceiver installation of the supervisor is adapted to issue instructions to the vehicle and/or the agricultural implement. According to another feature of the invention, the mobile transceiver installation comprises optical and/or acoustical means with the aid of which the supervisor is given a warning.

If the sensors determine that the furrow deviates from the desired furrow then, according to a further characterizing feature of the invention, the supervisor can remotely adjust the plough hydraulically by means of the mobile transceiver installation.

The invention will now be described with reference to the accompanying drawings in which:
Figure 1 shows a plan view of an unmanned agricultural vehicle according to the invention during operation on a plot;
Figure 2 show a side elevation of the unmanned agricultural vehicle viewed in the direction of the arrow II in Figure 1;

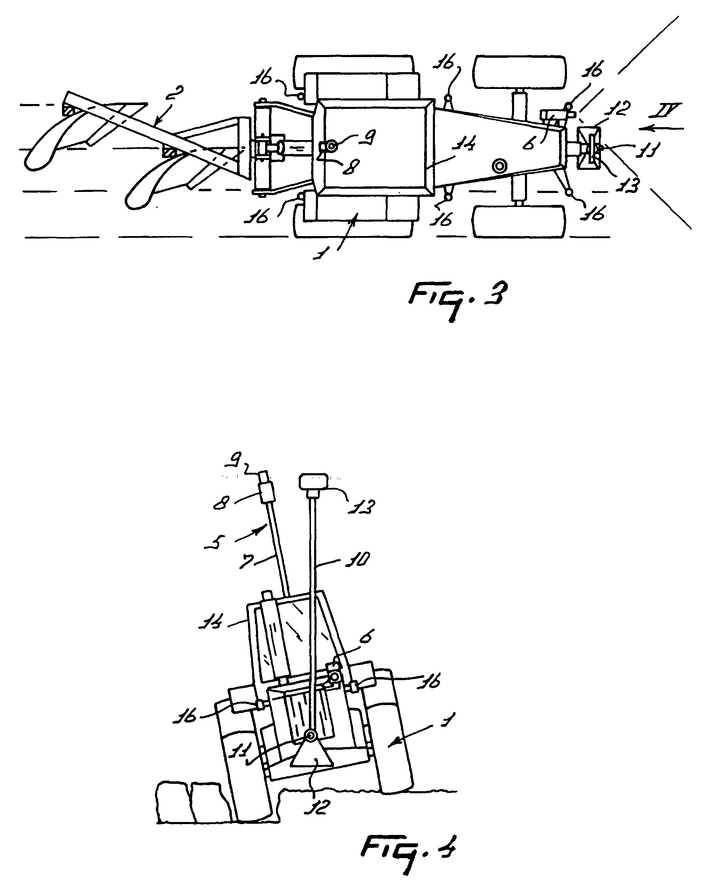

Figure 3 shows a plan view of the unmanned agricultural vehicle viewed in the direction of the arrow III in Figure 2;
Figure 4 shows a front elevation of the unmanned agricultural vehicle viewed in the direction of the arrow IV in Figure 2;

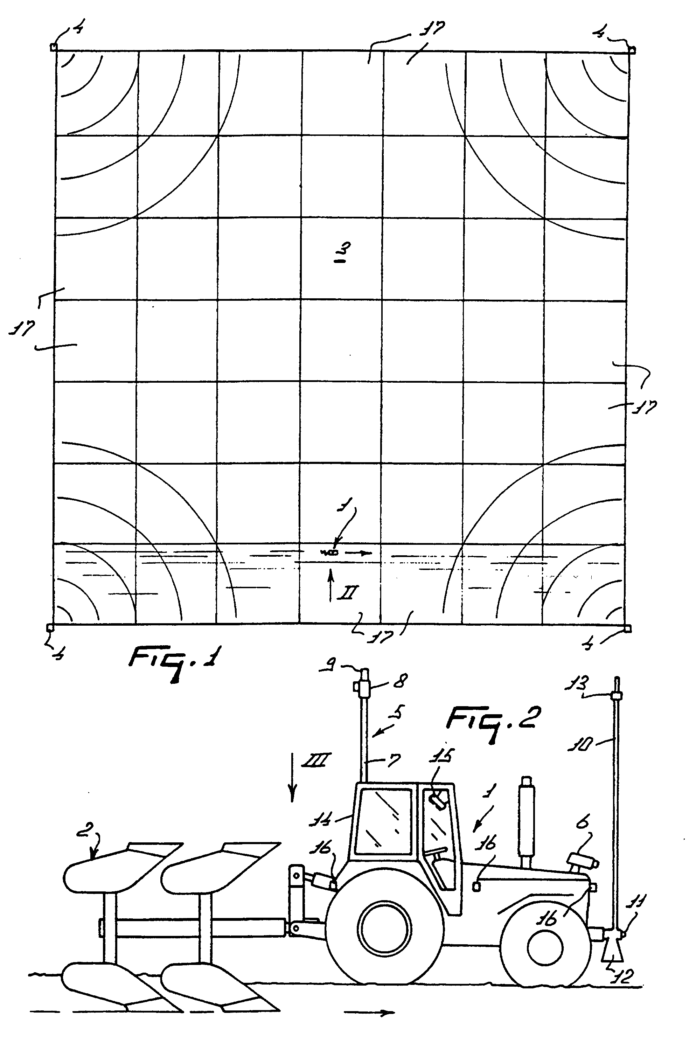

Figure 1 shows a plan view of an unmanned vehicle 1 with a plough 2 therebehind which is engaged in ploughing a plot 3. Stationary transceiver installations 4 are installed at each of the four corners of the plot 3. Each of these transceiver installations 4 is capable of cooperating with a transceiver installation 5 which is fitted to the unmanned vehicle 1. With the aid of the stationary transceiver installation 4 and the transceiver installation 5 fitted to the unmanned agricultural vehicle, the position of the unmanned vehicle 1 on the plot can be very accurately determined.

The unmanned agricultural vehicle 1 is further provided with a monitoring system including sensors, with the aid of which a check can be made or intervention can be resorted to if, during operation, the unmanned vehicle 1 or an agricultural implement supported or towed thereby does not function in accordance with the requirements therefor. Notification of such malfunctioning of the vehicle and/or the agricultural implement is then transmitted by means of the transceiver installation 5 to a (non-shown) mobile transceiver installation whereby the attention of the supervisor is drawn to the malfunctioning of the vehicle and/or the agricultural implement. The supervisor can issue instructions to the vehicle 1 or the agricultural implement via the mobile transceiver installation. A first rotatable camera 6 is mounted close to the front of the vehicle 1 with the aid of which images from the front of the vehicle 1 can be collected. Via the transceiver installation 5 the images are transmitted to the supervisor's mobile transceiver installation, whereupon the supervisor can view the images on a viewing screen. Centre-rear of the vehicle 1 a substantially vertical telescopically extendable standard 7 is fitted and on the extremity of which a second rotatably pivotable camera 8 is also fitted. By means of the second camera 8 images are likewise collected from the area around the vehicle 1. A rotatable telemeter 9 is also fitted to the extremity of the standard 7 and with the aid of which the distance to certain objects somewhere around the vehicle 1 can be determined. In the event of there being a strange object at a specific distance from the vehicle 1 and by which the progress of the latter may be impeded, the monitoring system automatically puts the control system of the vehicle 1 out of operation so that it comes to a stop added to which the monitoring system informs the supervisor of the incident. By means of the images recorded by the camera the supervisor is able to pass instructions via the mobile transceiver installation so that the obstruction can be avoided.

Furthermore, a pendulum arm 10 is fitted to the front side of the vehicle 1, which pendulum arm 10 is rotatable about a substantially horizontal axis 11 and is provided with a counterweight 12 on its lower side. Because of the action of the counterweight 12 and the freely pivoting pendulum arm 10, the latter remains substantially vertical irrespective of the angle-of-slope adopted by the vehicle 1. In the shaft 11 there is provided a (non-shown) clinometer by means of which the angle-of-slope of the vehicle with respect to the horizontal plane can be determined. In the presently described embodiment of the invention, the clinometer comprises a potentiometer. The pendulum arm 10 further comprises an antenna 13 of the transceiver installation 5 close to its upper side. The monitoring system further comprises a computer 15 accommodated in the cabin 14 of the vehicle 1. The computer 15 is programmed with an adjustable threshold value for the angle-of-slope of the vehicle together with alarming means which warn the supervisor if the threshold value is exceeded. In the event of a signal being given by the clinometer that the threshold value has been exceeded, then a vehicle-control blocking system is activated to put the control system of the vehicle out of operation, whereafter the vehicle is stopped. The supervisor is warned of the incident via the alarming means, whereafter he is enabled to intervene.

The vehicle 1 is further provided with sensors 16 on both sides close to the front and rear sides and the centre with the aid of which the distance to the ground can be measured. By means of the sensors 16, for example, it is possible to determine during ploughing whether the ploughed furrow has the required depth. If the measured depth deviates from the required depth, then the supervisor is informed thereof via the transceiver installation 5. The supervisor can then remotely control a hydraulic plough adjuster in order that the required depth is achieved.

In the computer 15, by means of a coding system, a plot 3 is split into rectangular areas 17 each of which areas is provided with a unique distinguishing code, see Figure 1. If a fault is reported, the supervisor is enabled to determine exactly in which of the areas 17 the vehicle 1 is located.

## Claims

1. An unmanned agricultural vehicle (1), such as a tractor, provided with a transceiver installation (5) which is arranged to cooperate with a stationary transceiver installation (4) and/or with a satellite-navigation system, such as GPS, the vehicle (1) being provided with a monitoring system including sensors, with the aid of which a check can be made or intervention can be resorted to if, during operation, the unmanned vehicle (1) and/or an agricultural implement supported or towed thereby do/does not function in accordance with the requirements therefor, **characterized in that** the monitoring system of the vehicle (1) is provided with sensors (16) on both sides of the vehicle close to the front and rear sides and in the centre thereof and with the aid of which the distance to the ground can be measured, **in that** the monitoring system is provided with a computer (15) which, after receiving signals from the sensors (16), is designed to transmit via the transceiver-installation (5) a signal to a mobile transceiver-installation of a supervisor if the measured depth deviates from a required depth.

2. An unmanned vehicle as claimed in claim 1, **characterized in that** the monitoring system is provided with a computer (15) which, after having received signals from the sensors (16), transmits a signal to the control system of the vehicle (1) in order to stop the vehicle (1).

3. An unmanned vehicle as claimed in claim 2, **characterized in that** the computer (15) is designed to give a warning to the mobile transceiver-installation of the supervisor via the transceiver- installation (5) in the event of an interruption occurring.

4. An unmanned vehicle as claimed in any one of the preceding claims, **characterized in that** the mobile transceiver installation of the supervisor is adapted to issue instructions to the vehicle (1) and/or the agricultural implement.

5. An unmanned vehicle as claimed in claim 4, **characterized in that** the vehicle (1) is provided with a hydraulic plough adjuster, which is adapted to be remotely operated by the supervisor via the mobile transceiver-installation.

6. An unmanned vehicle as claimed in any one of the preceding claims, **characterized in that** the mobile transceiver-installation of the supervisor comprises optical and/or acoustical means with the aid of which the supervisor is given a warning.

## Patentansprüche

1. Unbemanntes landwirtschaftliches Fahrzeug (1), wie z. B. ein Schlepper, mit einer Sende-Empfangs-Vorrichtung (5), die dazu ausgelegt ist, mit einer stationären Sende-Empfangs-Vorrichtung (4) und/oder mit einem Satellitennavigationssystem, wie z. B. GPS, zusammenzuwirken, wobei das Fahrzeug (1) mit einer Überwachungsvorrichtung versehen ist, die Sensoren enthält, mit deren Hilfe eine Überprüfung durchgeführt oder ein Eingriff erfolgen kann, wenn im Betrieb das unbemannte Fahrzeug (1) und/oder ein von ihm abgestütztes oder gezogenes landwirtschaftliches Gerät nicht entsprechend den Erfordernissen arbeiten/arbeitet,
**dadurch gekennzeichnet, daß** die Überwachungsvorrichtung des Fahrzeuges (1) auf beiden Seiten des Fahrzeuges nahe dessen Vorder- und Rückseite und in seiner Mitte mit Sensoren (16) versehen ist, mit deren Hilfe der Abstand zum Boden gemessen werden kann, und daß die Überwachungsvorrichtung mit einem Computer (15) versehen ist, der dazu ausgelegt ist, nach dem Empfang von Signalen von den Sensoren (16) über die Sende-Empfangs-Vorrichtung (5) ein Signal an eine mobile Sende-Empfangs-Vorrichtung einer Aufsichtsperson zu geben, wenn die gemessene Tiefe von einer erforderlichen Tiefe abweicht.

2. Unbemanntes Fahrzeug nach Anspruch 1,
**dadurch gekennzeichnet, daß** die Überwachungsvorrichtung mit einem Computer (15) versehen ist, der nach dem Empfang von Signalen von den Sensoren (16) ein Signal an die Steuervorrichtung des Fahrzeuges (1) gibt, um das Fahrzeug (1) anzuhalten.

3. Unbemanntes Fahrzeug nach Anspruch 2,
**dadurch gekennzeichnet, daß** der Computer (15) dazu ausgelegt ist, über die Sende-Empfangs-Vorrichtung (5) eine Warnung an die mobile Sende-Empfangs-Vorrichtung der Aufsichtsperson zu übermitteln, falls eine Unterbrechung eintritt.

4. Unbemanntes Fahrzeug nach einem der vorhergehenden Ansprüche,
**dadurch gekennzeichnet, daß** die mobile Sende-Empfangs-Vorrichtung der Aufsichtsperson geeignet ist, Anweisungen an das Fahrzeug (1) und/oder das landwirtschaftliche Gerät zu geben.

5. Unbemanntes Fahrzeug nach Anspruch 4,
**dadurch gekennzeichnet, daß** das Fahrzeug (1) mit einer hydraulischen Pflugeinstellvorrichtung versehen ist, die dazu ausgelegt ist, von der Aufsichtsperson über die mobile Sende-Empfangs-Vorrichtung fernbetätigt zu werden.

6. Unbemanntes Fahrzeug nach einem der vorhergehenden Ansprüche,
**dadurch gekennzeichnet, daß** die mobile Sende-Empfangs-Vorrichtung der Aufsichtsperson optische und/oder akustische Vorrichtungen umfaßt, mittels derer der Aufsichtsperson eine Warnung übermittelt wird.

## Revendications

1. Véhicule agricole sans pilote (1), tel qu'un tracteur, pourvu d'une installation formant émetteur-récepteur (5) agencée pour coopérer avec une installation formant émetteur-récepteur fixe (4) et/ou un système de navigation par satellite, tel qu'un GPS, le véhicule (1) étant pourvu d'un système de contrôle comprenant des capteurs, à l'aide desquels on peut réaliser un contrôle ou recourir à une intervention si, au cours de l'utilisation, le véhicule sans pilote (1) et/ou un instrument agricole soutenu ou remorqué par celui-ci ne fonctionnent pas en accord avec les conditions requises pour cela, **caractérisé en ce que** le système de contrôle du véhicule (1) est pourvu de capteurs (16) des deux côtés du véhicule proche des côtés avant et arrière et au centre dudit véhicule et à l'aide desquels la distance jusqu'au sol peut être mesurée, **en ce que** le système de contrôle est pourvu d'un ordinateur (15) qui, après avoir reçu des signaux en provenance des capteurs (16), est conçu pour transmettre via l'installation formant émetteur-récepteur (5) un signal en direction d'une installation formant émetteur-récepteur d'un superviseur si la profondeur mesurée dévie d'une profondeur requise.

2. Véhicule sans pilote selon la revendication 1, **caractérisé en ce que** le système de contrôle est pourvu d'un ordinateur (15) qui, après avoir reçu des signaux en provenance des capteurs (16), transmet un signal au système de commande du véhicule (1) pour arrêter le véhicule (1).

3. Véhicule sans pilote selon la revendication 2, **caractérisé en ce que** l'ordinateur (15) est conçu pour donner un avertissement à l'installation mobile formant émetteur-récepteur du superviseur via l'installation formant émetteur-récepteur (5) dans le cas où une interruption surviendrait.

4. Véhicule sans pilote selon l'une quelconque des revendications précédentes, **caractérisé en ce que** l'installation mobile formant émetteur-récepteur du superviseur est adapté pour émettre des instructions au véhicule (1) et/ou à l'outil agricole.

5. Véhicule sans pilote selon la revendication 4, **caractérisé en ce que** le véhicule (1) est pourvu d'un ajusteur de charrue hydraulique qui est adapté pour être utilisé à distance par le superviseur via l'installation mobile formant émetteur-récepteur.

6. Véhicule sans pilote selon l'une quelconque des revendications précédentes, **caractérisé en ce que** l'installation mobile formant émetteur-récepteur du superviseur comprend des moyens optiques et/ou acoustiques à l'aide desquels le superviseur reçoit un avertissement.
